# EUROPÄISCHE PATENTSCHRIFT

(11) **EP 1 313 673 B1**
(45) Veröffentlichungstag und Bekanntmachung des Hinweises auf die Patenterteilung: **21.04.2004**
(21) Anmeldenummer: 01960522.9
(22) Anmeldetag: 20.07.2001
(51) Int. Cl.: C03B 33/09, C03B 33/03, C03B 33/10

(54) **VERFAHREN UND VORRICHTUNG ZUM DURCHSCHNEIDEN EINER FLACHGLASPLATTE IN MEHRERE RECHTECKPLATTEN**
METHOD AND DEVICE FOR CUTTING A FLAT GLASS PLATE INTO A NUMBER OF RECTANGULAR PLATES
PROCEDE ET DISPOSITIF POUR DECOUPER UNE PLAQUE DE VERRE PLATE EN PLUSIEURS PLAQUES RECTANGULAIRES

(30) Priorität: 24.08.2000 DE 10041519
(43) Veröffentlichungstag der Anmeldung: 28.05.2003
(73) Patentinhaber: Schott Glas, 55122 Mainz (DE); CARL-ZEISS-STIFTUNG trading as Schott Glas, 55122 Mainz (DE)
(72) Erfinder: HAUER, Dirk, 26954 Nordenham Ellwürden (DE); GEISSLER, Georg, 65510 Hünstetten-Wallrabenstein (DE); HOETZEL, Bernd, 55286 Wörrstadt (DE); LUETTGENS, Thomas, 55126 Mainz (DE)
(74) Vertreter: Fuchs Mehler Weiss & Fritzsche
(86) Internationale Anmeldenummer: PCT/EP2001/008397
(87) Internationale Veröffentlichungsnummer: WO 2002/016276

(56) Entgegenhaltungen:
- WO-A-01/38039
- DE-A- 2 112 908
- FR-A- 2 545 815
- GB-A- 2 303 095
- US-A- 3 880 029
- US-A- 4 187 755
- PATENT ABSTRACTS OF JAPAN vol. 2000, no. 11, 3. Januar 2001 (2001-01-03) & JP 2000 219528 A (SAMSUNG SDI CO LTD), 8. August 2000 (2000-08-08)
- PATENT ABSTRACTS OF JAPAN vol. 2000, no. 03, 30. März 2000 (2000-03-30) & JP 11 342483 A (HITACHI CABLE LTD), 14. Dezember 1999 (1999-12-14)
- PATENT ABSTRACTS OF JAPAN vol. 8, no. 212, 27. September 1984 (1984-09-27) & JP 59 097545 A (STANLEY ELECTRIC CO LTD), 5. Juni 1984 (1984-06-05)
- PATENT ABSTRACTS OF JAPAN vol. 2000, no. 12, 3. Januar 2001 (2001-01-03) & JP 2000 247671 A (TAKATORI CORP), 12. September 2000 (2000-09-12)

## Beschreibung

Die Erfindung bezieht sich auf ein Verfahren zum Durchschneiden einer Flachglasplatte in mehrere Rechteckplatten vorgegebener Kantenlänge mittels eines entlang den Schneidlinien bewegten Laserstrahles in Verbindung mit einem zugeordneten Kühlfleck zur Induzierung einer thermomechanischen Spannung entlang der Schneidlinie, die über der Bruchfestigkeit des Glases liegt, sowie mittels eines jeweils am Anfang der Schneidlinie mechanisch induzierten Initialrisses.

Konventionelle Trennverfahren für Flachglas basieren darauf, mittels eines Diamanten oder eines Schneidrädchens zunächst eine Ritzspur im Glas zu generieren, um das Glas anschließend durch eine äußere mechanische Kraft entlang der so erzeugten Schwachstelle zu brechen (Ritz-Brech-Methode). Nachteilig ist bei diesem Verfahren, daß durch die Ritzspur Partikel (Splitter) aus der Oberfläche gelöst werden, die sich auf dem Glas ablagern können und dort beispielsweise zu Kratzern führen können. Ebenfalls können sogenannte Ausmuschelungen an der Schnittkante entstehen, die zu einem unebenen Glasrand führen. Weiterhin führen die beim Ritzen entstehenden Mikrorisse in der Schnittkante zu einer verringerten mechanischen Beanspruchbarkeit, d. h. zu einer erhöhten Bruchgefahr.

Ein Ansatz, sowohl Splitter als auch Ausmuschelungen und Mikrorisse zu vermeiden, besteht im Trennen von Glas auf der Basis thermisch generierter mechanischer Spannung. Hierbei wird eine Wärmequelle, die auf das Glas gerichtet ist, mit fester Geschwindigkeit relativ zu dem Glas bewegt und so eine derart hohe thermomechanische Spannung erzeugt, daß das Glas Risse bildet. Der notwendigen Eigenschaft der Wärmequelle, die thermische Energie lokal, d. h. mit einer Genauigkeit besser einen Millimeter, was den typischen Schnittgenauigkeiten entspricht, positionieren zu können, genügen Infrarotstrahler, spezielle Gasbrenner und insbesondere Laser. Laser haben sich wegen ihrer guten Fokussierbarkeit, guten Steuerbarkeit der Leistung sowie der Möglichkeit der Strahlformung und damit der Intensitätsverteilung auf Glas bewährt und durchgesetzt. Dabei ist es sowohl möglich, das Glas durch den Laserstrahl zunächst zu ritzen, um es anschließend mechanisch zu brechen, als auch das Glas direkt mit dem Strahl in Verbindung mit einem mechanisch aufgebrachten Startriß, auch Anritz oder Initialriß genannt, zu durchbrennen, d.h. zu schneiden. Die Erfindung geht von der Alternative des Schneidens aus.

Dieses Laserstrahl-Schneidverfahren, das durch eine lokale Erwärmung durch den fokussierten Laserstrahl in Verbindung mit einer Kühlung von außen eine thermomechanische Spannung bis über die Bruchfestigkeit des Werkstoffes induziert, ist durch mehrere Schriften bekannt geworden, beispielsweise durch die EP 0 872 303 A 2, die DE 693 04 194 T 2, die JP 2000 219 528 A und die DE 43 05 107 C 2. Es braucht daher hier nicht mehr näher beschrieben zu werden.

Für zahlreiche Anwendungen in der Technik, insbesondere für die Herstellung von Displayscheiben von modernen Kommunikationsprodukten wie Mobiltelephone, Taschenrechner und dergleichen, werden Rechteck-Dünnglasscheiben mit vorgegebenen Kantenlängen benötigt. Diese Rechteckscheiben, die auch solche mit einem quadratischen Format einschließen, werden typischerweise durch Zerteilen einer größeren Flachglasplatte in mehrere Rechteckplatten erzeugt. Dabei wird die größere Flachglasplatte zunächst entlang mehrerer, parallel zueinander verlaufenden ersten Schneidlinien und danach um 90° versetzt, ebenfalls entlang mehrerer parallel verlaufender zweiten Schneidlinien geschnitten. Dadurch entstehen, vorgegeben durch die Schnittpunkte der sich unter einem Winkel von 90° schneidenden Schneidlinien, die gewünschten Rechteckplatten, wobei der Abstand zwischen den parallelen Schneidlinien jeweils die Kantenlängen der Rechteckplatten vorgibt.

Bei dieser Methodik der Herstellung von Rechteckenscheiben durch Zerteilen einer größeren Flachglasscheibe entsteht hinsichtlich des verfahrensbedingt notwendigerweise mechanisch aufzubringenden Startrisses, typischerweise mittels eines Schneidrädchens, folgende Problematik. Während bei der Anbringung des Startrisses bei den ersten Schneidlinien das Schneidrädchen maßgenau an der Kante der zu zerteilenden Flachglasplatte angesetzt werden kann, d.h. in optimaler Weise ein Startriß erzeugt werden kann, ist das bei den zweiten um 90° versetzten Schneidlinien nicht mehr der Fall. Hierbei muß das Schneidrädchen im Schnittpunkt der beiden um 90° versetzt laufenden Schneidlinien von oben aufgesetzt werden. Dies erfordert nicht nur eine sehr präzise punktgenaue Positionierung des Schneidrädchens durch eine entsprechend präzise arbeitende Steuerung, sondern führt auch verfahrensbedingt notwendigerweise dazu, daß die vier in den Schnittpunkten der Schneidlinien jeweils zusammenlaufenden Ecken von vier Rechteckplatten beschädigt werden können, da der Startriß nicht, wie bei den ersten Schneidlinien, an der Plattenkante angesetzt werden kann, wodurch die Beschädigung der Platte sehr gering gehalten werden kann, sondern von oben kommend relativ flächig im Schnittpunkt der Schneidlinien angesetzt werden muß.

Um diese Nachteile zu vermeiden, konnten die Rechteckplatten nicht in einem Arbeitsvorgang durchgeschnitten und vereinzelt werden, d.h. der Zerteilungsprozeß mußte unterbrochen werden.

Der Erfindung liegt die Aufgabe zugrunde, das eingangs bezeichnete Verfahren so zu führen bzw. die zugehörige Durchführungs-Vorrichtung so auszugestalten, daß auch hinsichtlich der zweiten Schneidlinien in einem Arbeitsgang, d.h. ohne den Zerteilungsprozeß zu unterbrechen, ein Startriß ohne größere Beschädigung der Platten exakt mechanisch gesetzt werden kann, mit dem gleichen geringen Aufwand wie beim Setzen des Startrisses bei den ersten Schneidlinien.

Bei dem Verfahren gelingt dies ausgehend von dem eingangs bezeichneten Verfahren zum Durchschneiden einer Flachglasplatte in mehrere Rechteckplatten vorgegebener Kantenlänge mittels eines entlang den Schneidlinien bewegten Laserstrahles in Verbindung mit einem zugeordneten Kühlfleck zur Induzierung einer thermomechanischen Spannung entlang der Schneidlinie, die über der Bruchfestigkeit des Glas liegt, sowie mittels eines jeweils am anfang der Schneidlinie mechanisch induzierten Initialrisses, erfindungsgemäß mit den Schritten:
- Zerschneiden der Flachglasplatte in einer Grundstellung entlang mehrerer paralleler erster Schneidlinien, deren Abstand sich jeweils nach der vorgegebenen Länge der einen Kante der Rechteckplatten bestimmt, in mehrer Teilplatten mit Induzierung des Initialrisses am Anfang jeder Schneidlinie an der Kante der Flachglasplatte,
- Drehen der so zerschnittenen Flachglasplatte um 90° und Auseinanderbewegen der geschnittenen Teilplatten auf einen vorgegebenen Abstand zueinander, und
- Zerschneiden der auseinanderbewegten Teilplatten entlang mehrerer, paralleler zweiter Schneidlinien, die senkrecht zu den ersten Schneidlinien verlaufen und deren Abstand sich jeweils nach der vorgegebenen Länge der anderen Kante der zuzuschneidenden Rechteckplatten bestimmt, in diese Rechteckplatten, mit Induzierung des Initialrisses am Anfang jeder Schneidlinie an der Kante jeder Teilplatte.

Hinsichtlich der eingangs bezeichneten Vorrichtung zum Durchschneiden einer Flachglasplatte in mehrere Rechteckplatten vorgegebener Kantenlänge mittels einer Laserstrahl-Schneideinrichtung gelingt die Lösung der Aufgabe erfindungsgemäß mit einem auf einem Grundkörper um 90° drehbar aufgebauten Schneidtisch, auf dem die Flachglasplatte aufspannbar ist, und der aus mehreren Tischsegmenten besteht, die auseinanderfahrbar auf dem Grundkörper angeordnet sind.

Durch die erfindungsgemäßen Maßnahmen ist es daher möglich, mit Hilfe des spannungsinduzierten Schneidens von Glas mit Laser, Glasscheiben in einem Arbeitsgang durchzuschneiden und zu vereinzeln, ohne den Zerteilungsprozeß zu unterbrechen. Darüber hinaus ist es möglich, den für den Laserschnitt erforderlichen Initialriß exakt zu platzieren und die bei der Einbringung des Initialrisses erzeugte Schädigung minimal zu halten.

Besondere Vorteile werden gemäß einer Ausgestaltung der Erfindung mit einem Verfahrensgang erzielt, bei dem jeweils die Randbereiche der Flachglasplatte als Abfallplatten abgeschnitten werden. Dadurch ist sichergestellt, daß die Kanten der zuzuschneidenden Rechteckplatten keine Beschädigungen aufweisen.

Ein besonders exakt platzierter Initialriß wird gemäß einer Weiterbildung der Erfindung mit einer Verfahrensführung erreicht, bei der die Induzierung des Initialrisses mittels eines gesteuert bewegten Hartmetall-Schneidrädchens erfolgt, das vor der jeweils zu ritzenden Glaskante abgesenkt und dann gegen die Kante zum Anritzen bewegt wird.

Vorrichtungsmäßig läßt sich das notwendige exakte, reproduzierbare Auseinanderfahren der Tischsegmente gemäß einer Ausgestaltung der Erfindung durch eine Vorrichtung bewerkstelligen, bei der auf dem Grundkörper zwei parallel zueinander angeordnete Führungsschienen befestigt sind, und jedes Tischsegment auf zwei Laufwagen befestigt ist, die in den Führungsschienen durch Antriebssysteme verschiebbar aufgenommen sind.

Vorzugsweise ist dem Schneidtisch der Vorrichtung in an sich bekannter Weise ein Vakuumsystem zum Aufspannen der Flachglasplatte und der zerschnittenen Teilplatten zugeordnet. Besondere Vorteile werden dabei erzielt, wenn jedem Tischsegment ein getrennt ansteuerbares Vakuumfeld zugeordnet ist. Dadurch können die zugeschnittenen Teilplatten getrennt fixiert und gelöst werden, so daß ein negativer Einfluß des durch das Vakuum eventuell verspannten Glases auf den nachfolgenden Laserschnitt vermieden wird.

Da es bei dem Laserstrahlschneiden auf einen exakt platzierten Initialriß ankommt, sieht eine Ausgestaltung der Erfindung eine Vorrichtung vor, bei der zur Erzeugung eines mechanischen Initialrisses ein in seiner Bewegung positionierbares Hartmetall-Schneidrädchen vorgesehen ist. Um dabei die Gefahr, daß das Schneidrädchen den Schneidtisch berührt, was insbesondere bei dünnem Glas infolge der nicht zu vermeidenden Unebenheit des Schneidtisches bei konstanter Zustellung des Schneidrädchens möglich wäre, zu verringern, und um zu vermeiden, daß die Kühlluft, die dem schneidenden Laserstrahlfleck zugeordnet ist, die Glasplatte beim Schneiden anhebt, sieht eine Ausgestaltung der Erfindung eine Vorrichtung vor, bei der in den Tischsegmenten entlang der Schneidlinien in der 90°-Position des Schneidtisches bei auseinanderbewegten Tischsegmenten eine abgesenkte Nut ausgebildet ist. Über diese Nut kann dann die aufgeblasene Kühlluft entweichen bzw. das Schneidrädchen kann, wenn es unterhalb der Glasplatte zugestellt wird, ohne Beschädigung in diese Nut eintauchen.

Anhand eines in der Zeichung dargestellten Ausführungsbeispieles wird die Erfindung näher erläutert.

Es zeigen:
- Fig. 1: in zwei Figurenteilen A und B das Grundprinzip des Zerschneidens einer Flachglasplatte in mehrere Rechteckplatten mittels des Laserstrahlschneidens in Verbindung mit einem mechanischen Initialriß, mit ersten Schneidlinien entlang einer Kante der Rechtecke in einer Grundstellung der Flachglasplatte gemäß Figurenteil A, und mit zweiten Schneidlinien entlang der anderen Kante der Rechtecke in einer um 90° gedrehten Stellung der Flachglasplatte gemäß Figurenteil B,
- Fig. 2: ein bevorzugtes Ausführungsbeispiel der erfindungsgemäßen Schneidvorrichtung mit einem um 90° drehbaren Schneidtisch in der Grundstellung, der aus mehreren Tischsegmenten besteht, die über Laufwagen und auf einem Grundkörper angebrachte Führungsschienen auseinanderbewegbar sind,
- Fig. 3: den Schneidtisch nach Fig. 2 in der 90°-Stellung, und
- Fig. 4: eine Ausführungsform mit entlang den Schneidlinien in den Tischsegmenten integrierten Nuten.

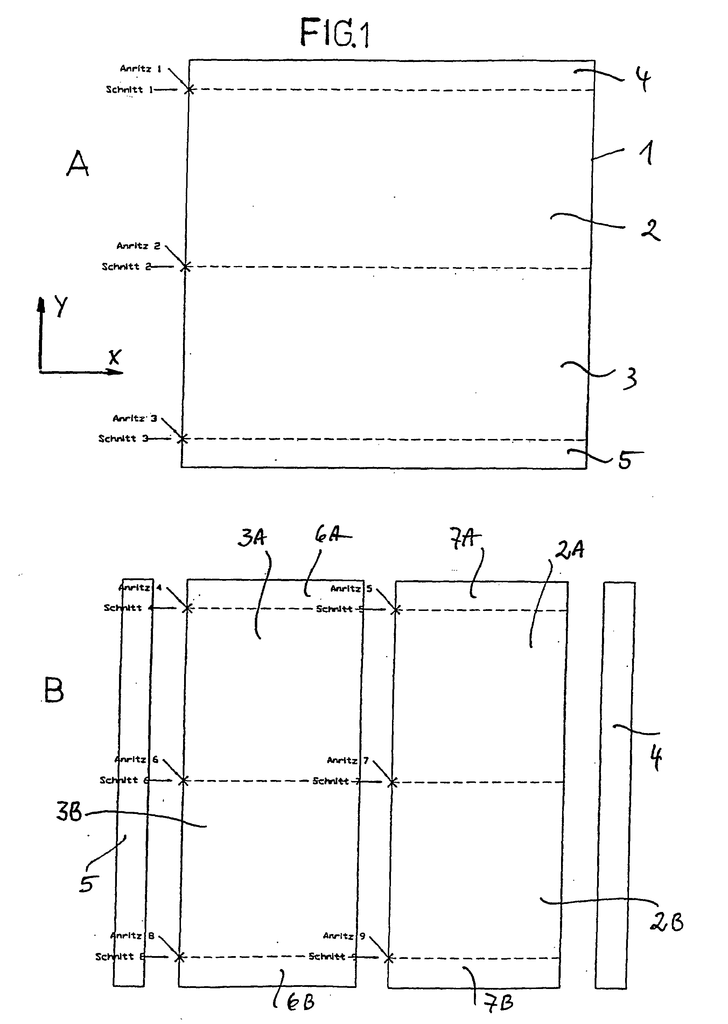

Die Fig. 1 zeigt in den beiden Figurenteilen A und B das Grundprinzip des erfindungsgemäßen Verfahrens zum Durchschneiden einer Flachglasplatte 1 in mehrere, hier vier, Rechteckplatten. Im ersten Schritt werden in der 0°-Stellung, d.h. der Grundstellung der Flachglasplatte 1, die in dem Figurenteil A dargestellt ist, drei parallele Schneidlinien 1-3 mit zugehörigen Startrissen, d.h. Anritzen 1-3, die typischerweise mechanisch durch ein Schneidrädchen aufgebracht werden, durch Laserstrahlschneiden in X-Richtung in die Flachglasplatte eingebracht. Die Anritze 1-3 können dabei in optimaler Weise präzise an der Kante der Flachglasplatte 1 gesetzt werden, mit einer minimalen Schädigung der Platte in der Umgebung des Anritzes.

Das Laserstrahlschneiden ist bekannt, beispielsweise durch die eingangs bezeichneten Druckschriften. Dabei wird ein Laserstrahl mit einem vorgegebenen Strahlprofil und damit einem entsprechend konfigurierten Schneidfleck entlang den Schneidlinien bewegt. Durch die hohe Temperatur in der Flachglasplatte 1, die durch den Laserstrahl erzeugt wird, wird eine thermomechanische Spannung entlang der zu trennenden Schneidlinie in der Flachglasplatte 1 erzeugt.

Zur Erhöhung der thermomechanischen Spannung wird in bekannter Weise dem Schneidfleck eine Kühlung in Form eines Kühlflecks in einem definierten Abstand auf der Schneidlinie nachgeführt. Dieser Kühlfleck, der auch konzentrisch zum Schneidfleck platziert werden kann, wird beispielsweise durch Aufblasen von kalter Luft oder Gas/Flüssigkeitsgemischen durch eine Düse erzeugt. Durch die Schwächung des Glases am Startpunkt des Schneidens durch den Anritz reißt dann das Glas aufgrund der aufgebauten thermomechanischen Spannung entlang der Schneidlinien.

Nach dem Einbringen der Schnitte 1-3 gemäß Figurenteil A, was zu zwei Gutglasplatten 2 und 3 sowie zwei Rand-Abfallplatten 4 und 5 führt, wird dann die zerschnittene Flachglasplatte 1 um 90° gedreht, um drei weitere parallele Schneidlinien, ebenfalls in X-Richtung, vorzugeben, die die Schneidlinien 1-3 aus dem Figurenteil A unter einem Winkel von 90° schneiden.

Die Initialrisse, d.h. die Anritze für die aus dem ersten Schnitt hervorgegangenen Gutglasplatten 2 und 3 müssen nun an der Glaskante des zuvor erzeugten Laserschnittes 1-3 induziert werden. Damit dieser Initialriß möglichst minimal ist und das Glas nur an der erforderlichen Stelle beschädigt wird, werden erfindungsgemäß vor der Einbringung des Anritzes die im ersten Schneidvorgang erzeugten Gutglasplatten 2,3 und die-Rand-Abfallplatten 4,5 auf einen vorgegebenen Abstand auseinandergefahren. Dieser Zustand ist im Figurenteil B dargestellt. Um dabei durch diese Auseinander-Bewegung keine Verluste bei der Genauigkeit zu erlangen, wird sie sehr exakt und reproduzierbar ausgeführt.

Mittels der durch den Laserstrahl durchgeführten zweiten, parallelen Schnitte 4,5 und 8 in Verbindung mit den zugehörigen gleichziffrigen Anritzen wird die Gutplatte 3 in zwei Rechteckplatten 3A und 3B in Verbindung mit zwei Rand-Abfallplatten 6A und 6B geteilt. Entsprechend wird die Gutplatte 2 durch die mittels des Laserstrahles durchgeführten parallelen zweiten Schnitte 5,7 und 9 in Verbindung mit den zugehörigen gleichziffrigen Anritzen in zwei Rechteckplatten 2A und 2B und zwei Rand-Abfallplatten 7A und 7B zerschnitten. Es entstehen dadurch in einem Arbeitsgang ohne Unterbrechung des Zerteilungsprozesses vier Rechteckplatten 2A, 2B, 3A und 3B mit vorgegebenen Kantenlängen, die an platzierten Anritzstellen nur minimale, unvermeidliche Schädigungen aufweisen, die die spätere Anwendung nicht beeinträchtigen.

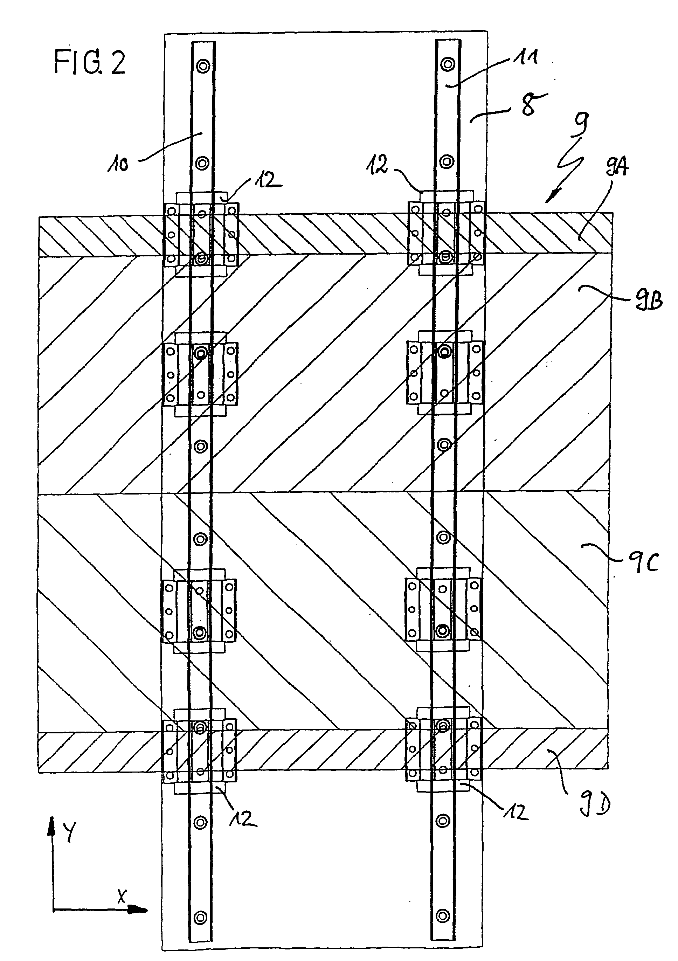

Die Figur 2 zeigt die erfindungsgemäße Schneid-Vorrichtung zur Durchführung des vorbeschriebenen erfindungsgemäßen Verfahrens in der 0°-Stellung entsprechend Fig. 1, Teil A. Die Schneidvorrichtung besteht aus einer Grundplatte 8, auf welcher ein Schneidtisch 9 aufgebaut ist, auf dem die zu zerteilende Flachglasplatte 1 nach Fig. 1 durch Aufbringen eines Unterdruckes aufgespannt wird.

Dieser Schneidtisch besteht aus vier schraffiert gekennzeichneten Tischsegmenten 9A-9D, die kongruent zu den gemäß Fig. 1 zu schneidenden Glas-Teilplatten 2-5 sind. Generell sind die Anzahl und die Abmessungen der Tischsegmente an die Zahl und die Kantenlänge der zu schneidenden Glas-Teilplatten anzupassen.

Auf der Grundplatte 8 sind zwei, parallel zueinander angeordnete Führungsschienen 10,11 für jeweils vier daran geführten Laufwagen 12 befestigt, wobei der Übersicht halber nur einige Laufwagen mit einer Bezugsziffer versehen sind. Jedes Tischsegment 9A-9D ist dabei mit einem Paar von Laufwagen 12 verbunden, so daß jedes Tischsegment auf den Führungsschienen 10,11 in Y-Richtung bei der Grundstellung und in X-Richtung bei der um 90° gedrehten Stellung verschoben werden kann.

Die Tischsegmente 9A-9D sind dabei vorzugsweise so gestaltet, daß ihnen jeweils ein getrennt ansteuerbares Vakuumfeld zugeordnet ist, so daß die nach dem Bearbeitungsprozeß erzeugten Glas-Teilplatten getrennt fixiert und gelöst werden können, so daß ein negativer Einfluß des durch das Vakuum eventuell verspannten Glases auf den Laserschnitt vermieden werden kann.

Das Verschieben der Tischsegmente kann mit verschiedenen Antriebsarten realisiert werden, z.B. mit einem pneumatischen bzw. hydraulischen Antriebssystem, elektromotorisch oder elektromagnetisch mittels eines Hubsystems.

In der in Figur 2 dargestellten Grundstellung des Schneidtisches 9 werden die ersten drei, in Fig. 1A dargestellten Schnitte 1-3 zusammen mit dem zugehörigen Anritz entlang der Berührungslinien zwischen den Tischsegmenten ausgeführt. So verläuft beispielsweise der Schnitt 1 entlang der Berührungslinie zwischen den Tischsegmenten 9A und 9B. Der Anritz wird dabei jeweils seitlich an der linken Kante der Flachglasplatte 1 angesetzt, so daß die Schädigung der oberen und unteren Glasfläche minimal ist.

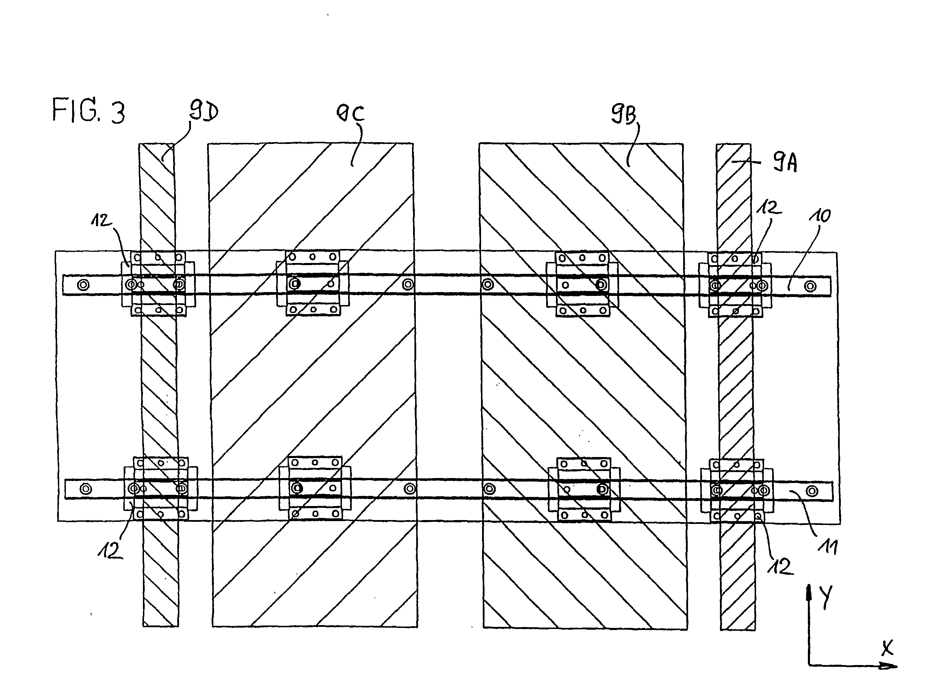

In der Figur 3 ist die Schneidvorrichtung für das Anbringen der drei Schnittlinien zur Erzeugung der Schnitte 4-9 nach Fig. 1B in der um 90° verdrehten Stellung des Schneidtisches dargestellt. Die Schnittrichtung ist auch in dieser 90°-Stellung nach Fig. 3 die X-Richtung. Um den Anritz auch bei den Teil-Glasplatten 2 und 3 jeweils seitlich an der Kante anbringen zu können, werden die zugehörigen Tischsegmente 9B und 9C, sowie die angrenzenden, den Abfall-Teilplatten 4,5 zugeordneten Tischsegmente 9A und 9B in X-Richtung auf einen vorgegebenen Abstand zueinander gefahren, damit ein den Anritz typischerweise bewirkendes Schneidrädchen zwischen die Tischsegmente gefahren werden kann, um dann seitlich gegen die jeweiligen Glaskante verfahren werden zu können.

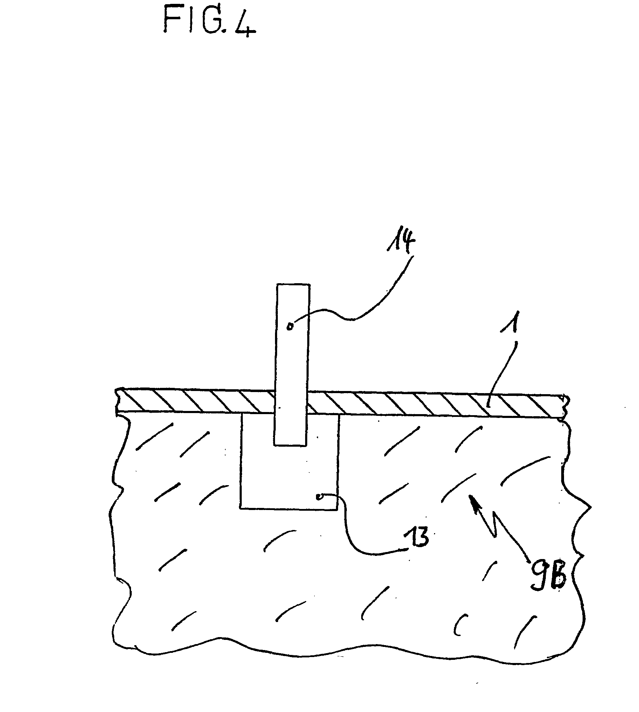

Die Fig. 4 zeigt in einer vergrößerten Ausschnitt-Darstellung mit Blickrichtung auf die Stirnseite eines Tischsegmentes, beispielsweise des Tischsegmentes 9B in Fig. 3, eine bevorzugte Variante der erfindungsgemäßen Schneidvorrichtung mit in den Tischsegmenten integrierten Nuten 13 direkt unterhalb der Schnittlinien, die in die Flachglasplatte 1 eingebracht werden sollen. Diese Nuten 13 haben typischerweise eine Anmessung von ca. 2mm x 1mm. Dadurch kann die dem Laserstrahl-Schneidfleck zugeordnete Kühlluft beim Einschneiden in die Flachglasplatte 1 unterhalb der Glasscheibe über die Nut entweichen, womit ein Anheben der geschnittenen Teilplatte durch den Kühlluftstrom vermieden werden kann. Darüber hinaus kann beim Schneiden von dünnem Glas das Anritzwerkzeug 14, z.B. ein Hartmetallrädchen, in die Nut 13 eintauchen, ohne die Gefahr, beim Anritzen des Glases den Schneidtisch mit dem Anritzwerkzeug zu berühren. Bedingt durch die mit nicht zu vermeidenden Toleranzen behaftete Unebenheiten der Schneidtischplatte kann es nämlich bei entsprechend dünnen Flachglasplatten und fester Zustellung des Anritzwerkzeuges 1 vorkommen, daß das Anritzwerkzeug bis unterhalb der Flachglasplatte 1 abgesenkt wird, was ohne die Nut eine Schädigung des Schneidtisches verursachen bzw. das Anritzwerkzeug stumpf machen könnte.

## Patentansprüche

1. Verfahren zum Duchschneiden einer Flachglasplatte (1) in mehrere Rechteckplatten (2A,2B,3A,3B) vorgegebener Kantenlänge mittels eines entlang den Schneidlinien bewegten Laserstrahles in Verbindung mit einem zugeordneten Kühlfleck zur Induzierung einer thermomechanischen Spannung entlang der Schneidlinie, die über der Bruchfestigkeit des Glases liegt, sowie mittels eines jeweils am Anfang der Schneidlinie mechanisch induzierten Initialrisses, mit den Schritten:
- Zerschneiden der Flachglasplatte (1) in einer Grundstellung entlang mehrerer paralleler erster Schneidlinien (Schnitte 1-3), deren Abstand sich jeweils nach der vorgegebenen Länge der einen Kante der Rechteckplatten bestimmt, in mehrere Teilplatten (2-5) mit Induzierung des Initialrisses am Anfang jeder Schneidlinie an der Kante der Flachglasplatte (1),
- Drehen der so zerschnittenen Flachglasplatte (1) um 90° und Auseinanderbewegen der geschnittenen Teilplatten (2-5) auf einen vorgegebenen Abstand zueinander, und
- Zerschneiden der auseinanderbewegten Teilplatten (2-5) entlang mehrerer, paralleler zweiter Schneidlinien (Schnitte 4-9), die senkrecht zu den ersten Schneidlinien verlaufen und deren Abstand sich jeweils nach der vorgegebenen Länge der anderen Kante der zuzuschneidenden Rechteckplatten bestimmt, in diese Rechteckplatten (2A,2B,3A,3B), mit Induzierung des Initialrisses am Anfang jeder Schneidlinie an der Kante jeder Teilplatte.

2. Verfahren nach Anspruch 1, bei dem jeweils die Randbereiche der Flachglasplatte (1) als Abfallplatten (4,5,6A,7A,7B) abgeschnitten werden.

3. Verfahren nach Anspruch 1 oder 2, bei dem die Induzierung des Initialrisses mittels eines gesteuert bewegten Hartmetall-Schneidrädchens (14) erfolgt, das vor der jeweilig zu ritzenden Glaskante abgesenkt und dann gegen die Kante zum Anritzen bewegt wird.

4. Vorrichtung zum Durchschneiden einer Flachglasplatte (1) in mehrere Rechteckplatten (2A,2B,3A,3B) vorgegebener Kantenlänge mittels einer Laserstrahl-Schneideinrichtung, mit einem auf dem Grundkörper (8) um 90° drehbar aufgebauten Schneidtisch (9), auf dem die Flachglasplatte (1) aufspannbar ist, und der aus mehreren Tischsegmenten (9A-9D) besteht, die auseinanderfahrbar auf dem Grundkörper (8) angeordnet sind.

5. Vorrichtung nach Anspruch 4, bei der auf dem Grundkörper (8) zwei parallel zueinander angeordnete Führungsschienen (10,11) befestigt sind, und jedes Tischsegment (9A-9D) auf zwei Laufwagen (12) befestigt ist, die in den Führungsschienen (10,11) durch Antriebssysteme verschiebbar aufgenommen sind.

6. Vorrichtung nach Anspruch 4 oder 5, bei der dem Schneidtisch (9) ein Vakuumsystem zum Aufspannen der Flachglasplatte (1) und den zerschnittenen Teilplatten (2,3;2A,2B,3A,3B) zugeordnet ist.

7. Vorrichtung nach Anspruch 6, bei der jedem Tischsegment (9A-9D) ein getrennt ansteuerbares Vakuumfeld zugeordnet ist.

8. Vorrichtung nach einem der Ansprüche 4 bis 7, bei der zur Erzeugung eines mechanischen Initialrisses ein in seiner Bewegung positionierbares Hartmetall-Schneidrädchen (14) vorgesehen ist.

9. Vorrichtung nach einem der Ansprüche 4 bis 8, bei der in den Tischsegmenten (9A-9D) entlang der Schneidlinien in der 90°-Position des Schneidtisches bei auseinanderbewegten Tischsegmenten eine abgesenkte Nut (13) ausgebildet ist.

## Claims

1. Method for cutting a flat glass plate (1) into a plurality of rectangular plates (2A, 2B, 3A, 3B) of a predetermined edge length by means of a laser beam, moved along the cutting lines, in conjunction with an assigned cooling spot for inducing along the cutting line a thermomechanical stress which is above the breaking strength of the glass, as well as by means of a mechanically induced initial crack at the beginning of each cutting line, having the following steps:
- cutting up the flat glass plate (1), in a basic position, along a plurality of first cutting lines (cuts 1-3), the spacing of which is determined in accordance with the predetermined length of the one edge of the rectangular plates, into a plurality of partial plates (2-5) with induction of the initial crack at the beginning of each cutting line at the edge of the flat glass plate (1),
- rotating the flat glass plate (1), thus cut up, by 90° and moving the cut partial plates (2-5) apart to a predetermined spacing from one another, and
- cutting up the partial plates (2-5) that have been moved apart along a plurality of parallel, second cutting lines (cuts 4-9), which extend perpendicular to the first cutting lines and the spacing of which is determined in accordance with the predetermined length of the other edge of the rectangular plates to be cut to size into these rectangular plates (2A, 2B, 3A, 3B), with induction of the initial crack at the beginning of each cutting line at the edge of each partial plate.

2. Method according to Claim 1, in which the peripheral regions of the first glass plate (1) are in each case cut off in the form of trimming plates (4, 5, 6A, 7A, 7B).

3. Method according to Claim 1 or 2, in which the induction of the initial crack is effected by means of a small hard-metal cutting wheel (14) moved in a controlled fashion, which is lowered to in front of the particular glass edge to be scored and is then moved against the edge to begin scoring it.

4. Device for cutting a flat glass plate (1) into a plurality of rectangular plates (2A, 2B, 3A, 3B) of predetermined edge length by means of a laser-beam cutting device, having a cutting table (9), constructed rotatably by 90° on the base body (8) on which table the flat glass plate (1) can be fastened, and which table comprises a plurality of table segments (9A-9D), which are disposed on the base body (8) in such a way that they can be moved apart from one another.

5. Device according to Claim 4, in which two parallel guide rails (10, 11) are secured to the base body (8), and each table segment (9A-9D) is secured to two trolleys (12), which are received in the guide rails (10, 11) in such a way that they can be displaced by drive systems.

6. Device according to Claim 4 or 5, in which a vacuum system for fastening the flat glass plate (1) and the cut-up partial plates (2, 3; 2A, 2B, 3A, 3B) is assigned to the cutting table (9).

7. Device according to Claim 6, in which a separately triggerable vacuum field is assigned to each table segment (9A-9D).

8. Device according to one of Claims 4 to 7, in which, to generate a mechanical initial crack, a small hard-metal cutting wheel (14) which is positional in its motion is provided.

9. Device according to one of Claims 4 to 8, in which a countersunk groove (13) is formed in the table segments (9A-9D) along the cutting lines, in the 90° position of the cutting table, with the table segments moved apart from one another.

## Revendications

1. Procédé pour découper une plaque de verre plat en plusieurs plaques rectangulaires (2A, 2B, 3A, 3B) dont les côtés ont des longueurs prédéfinies, au moyen d'un rayon laser déplacé le long des lignes de coupe en combinaison avec une zone de froid qui lui est assortie afin d'induire le long de la ligne de coupe une contrainte thermomécanique supérieure à la résistance du verre à la rupture, ainsi qu'au moyen d'une fissure initiale induite mécaniquement au début de chaque ligne de coupe, selon les étapes suivantes:
- découpe de la plaque de verre plat (1) en plusieurs plaques partielles (2-5) placée dans une position de base, le long de plusieurs lignes de coupe principales parallèles (coupes 1-3) dont l'écart est chaque fois défini en fonction de la longueur prédéfinie d'un côté des plaques rectangulaires, avec induction de la fissure initiale au début de chaque ligne de coupe sur le bord de la plaque de verre plat (1),
- rotation de 90° de la plaque de verre plat (1) ainsi découpée et écartement à un écart prédéfini des plaques partielles qui y ont été découpées et
- découpe dans ces plaques rectangulaires (2A, 2B, 3A, 3B) des plaques partielles (2-5) écartées l'une de l'autre, le long de plusieurs lignes de coupe secondaires parallèles (coupes 4-9), perpendiculaires aux lignes de coupe principales et dont l'écart est chaque fois défini en fonction de la longueur prédéfinie de l'autre côté des plaques rectangulaires à découper, avec induction de la fissure initiale au début de chaque ligne de coupe sur le bord de chaque sous-plaque.

2. Procédé selon la revendication 1, dans lequel les bordures de la plaque de verre plat (1) sont découpées en tant que plaques de rebut (4, 5, 6A, 7A, 7B).

3. Procédé selon la revendication 1 ou 2, dans lequel l'induction de la fissure initiale s'effectue au moyen d'une petite lame de coupe (14) en métal dur déplacée de manière contrôlée qui est d'abord abaissée en avant du bord du verre à entailler et ensuite déplacée contre le bord pour l'entailler.

4. Dispositif pour la découpe d'une plaque de verre plat (1) en plusieurs plaques rectangulaires (2A, 2B, 3A, 3B) dont les côtés ont des longueurs prédéfinies au moyen d'une installation de découpe par rayon laser, avec une table de découpe (9) montée sur le corps de base (8) de manière à pouvoir tourner sur 90° par rapport à celui-ci, sur laquelle la plaque de verre plat (1) peut être serrée et qui est composée de plusieurs segments de table (9A-9D) qui sont disposés sur le corps de base (8) de manière à pouvoir être écartés les uns des autres.

5. Dispositif selon la revendication 4, dans lequel deux rails de guidage (10, 11) sont fixés parallèlement l'un à l'autre sur le corps de base (8), chaque segment de table (9A-9D) étant fixé sur deux chariots (12) qui sont reçus dans les rails de guidage (10, 11) de manière à pouvoir coulisser au moyen de systèmes d'entraînement.

6. Dispositif selon la revendication 4 ou 5, dans lequel un système à vide qui serre la plaque de verre plate (1) et les plaques partielles découpées (2, 3 ; 2A, 2B, 3A, 3B) est associé à la table de découpe (9).

7. Dispositif selon la revendication 6, dans lequel un champ à vide qui peut être contrôlé séparément est associé à chaque segment de table (9A-9D).

8. Dispositif selon l'une des revendications 4 à 7, dans lequel une petite lame de coupe (14) en métal dur qui peut être positionnée en déplacement est prévue pour réaliser mécaniquement une fissure initiale.

9. Dispositif selon l'une des revendications 4 à 8, dans lequel une rainure abaissée (13) est prévue dans les segments de table (9A-9D) le long des lignes de coupe lorsque la table de découpe se trouve dans la position à 90 degrés avec les segments de table écartés les uns des autres.
